# EUROPÄISCHE PATENTSCHRIFT

(11) **EP 3 106 642 B1**
(45) Veröffentlichungstag und Bekanntmachung des Hinweises auf die Patenterteilung: **11.04.2018**
(21) Anmeldenummer: 16170133.9
(22) Anmeldetag: 18.05.2016
(51) Int. Cl.: F01N 13/18, F01N 1/08, B60K 13/04

(54) **ABGASSCHALLDÄMPFER ZUM QUEREINBAU IN EIN FAHRZEUG**
EXHAUST SILENCER FOR TRANSVERSE INSTALLATION IN A VEHICLE
AMORTISSEUR ACOUSTIQUE DE GAZ D'ECHAPPEMENT POUR UN MONTAGE TRANSVERSAL DANS UN VEHICULE

(30) Priorität: 29.05.2015 DE 102015108495
(43) Veröffentlichungstag der Anmeldung: 21.12.2016
(73) Patentinhaber: Eberspächer Exhaust Technology GmbH & Co. KG, 66539 Neunkirchen (DE)
(72) Erfinder: Spieth, Arnulf, 73269 Hochdorf (DE); Mesghena, Daniel, 73760 Ostfildern (DE); Müller, Joachim, 72555 Metzingen (DE); Rothfuß, Mathias, 71332 Waiblingen (DE); Weiß, Michael, 73655 Plüdershausen (DE)
(74) Vertreter: RLTG

(56) Entgegenhaltungen:
- DE-A1- 4 417 653
- DE-A1-102013 214 612
- GB-A- 2 536 956
- JP-A- 2012 166 612
- JP-A- 2013 091 410
- JP-A- 2016 114 033
- US-A- 2 046 193
- US-A- 2 958 389
- US-A- 3 289 786

## Beschreibung

Die vorliegende Erfindung betrifft einen Abgasschalldämpfer zum Quereinbau in ein Fahrzeug, umfassend ein in Richtung einer Gehäuselängsachse langgestrecktes Schalldämpfergehäuse mit einem Gehäusemantel und zwei in Richtung der Gehäuselängsachse in Abstand zueinander angeordneten und mit dem Gehäusemantel einen Schalldämpferinnenraum umgrenzenden Stirnwandungen, wobei wenigstens ein Einlassrohr in den Schalldämpferinnenraum führt und wenigstens ein Auslassrohr aus dem Schalldämpferinnenraum führt.
Ein derartiger Abgasschalldämpfer ist aus der DE 10 2013 214 612 A1 bekannt. Bei diesem mit einer Gehäuselängsachse in einer Fahrzeugquerrichtung orientiert einzubauenden bekannten Schalldämpfer sind im Schalldämpferinnenraum Zwischenwandungen angeordnet, welche von Rohrstücken durchsetzt sind und so eine akustische Verbindung und eine Abgasströmungsverbindung zwischen durch diese Zwischenwandungen voneinander getrennten Volumenbereichen des Schalldämpferinnenraums ermöglichen. Die Zwischenwandungen sind so gestaltet, dass bei einer in Fahrzeuglängsrichtung wirkenden Krafteinleitung in den Schalldämpfer, wie diese beispielsweise bei einem Heckaufprall eines anderen Fahrzeugs auftreten kann, der Schalldämpfer in Krafteinleitungsrichtung, also im Wesentlichen in Fahrzeuglängsrichtung, deformationsweich ist.
Die US 2 046 193 A offenbart einen Abgasschalldämpfer, bei welchem bei kreisrunder Ausgestaltung eines Einlass- bzw. Auslassrohres das Schalldämpfergehäuse abgeflacht ist oder bei kreisrunder Ausgestaltung des Schalldämpfergehäuses ein Einlass- bzw. Auslassrohr abgeflacht ist.

Die JP 2013 091410 A offenbart einen Abgasschalldämpfer, bei welchem bei kreisrunder Ausgestaltung eines Einlass- bzw. Auslassrohres das Schalldämpfergehäuse in einer Fahrzeuglängsrichtung abgeflacht ist. Es ist die Aufgabe der vorliegenden Erfindung, einen Abgasschalldämpfer zum Quereinbau in ein Fahrzeug vorzusehen, bei welchem eine zu einem Energieabbau beitragende Verformbarkeit des Abgasschalldämpfers insbesondere bei Krafteinleitung in einer Fahrzeuglängsrichtung gewährleistet ist.

Erfindungsgemäß wird diese Aufgabe gelöst durch einen Abgasschalldämpfer zum Quereinbau in ein Fahrzeug, umfassend ein in Richtung einer Gehäuselängsachse langgestrecktes Schalldämpfergehäuse mit einem Gehäusemantel und zwei in Richtung der Gehäuselängsachse in Abstand zueinander angeordneten und mit dem Gehäusemantel einen Schalldämpferinnenraum umgrenzenden Stirnwandungen, wobei wenigstens ein Einlassrohr in den Schalldämpferinnenraum führt und wenigstens ein Auslassrohr aus dem Schalldämpferinnenraum führt.

Dabei ist weiter vorgesehen, dass wenigstens ein Einlassrohr oder/und wenigstens ein Auslassrohr oder/und wenigstens ein Zwischenrohr mit einem in einer Abflachungsrichtung abgeflachten Querschnittsprofil ausgebildet ist, und dass der Gehäusemantel mit einem in der Abflachungsrichtung abgeflachten Querschnittsprofil ausgebildet ist. Die Ausgestaltung eines Einlassrohrs bzw. eines Auslassrohrs in einer Abflachungsrichtung hat zur Folge, dass bei Krafteinleitung in dieser Abflachungsrichtung ein derartiges Rohr deutlich leichter zu verformen ist, als ein Rohr mit kreisrundem Querschnittsprofil, was die leichtere Verformbarkeit des Abgasschalldämpfers in seiner Gesamtheit unterstützt. Auch das Abflachen des Gehäusemantels führt dazu, dass dieser bei Krafteinleitung in der Abflachungsrichtung vergleichsweise leicht verformbar ist, so dass die Gesamtsteifigkeit des Abgasschalldämpfers gemindert und ein verstärkter Energieabbau bei Verformung des Abgasschalldämpfers erreicht wird.

Da im Allgemeinen davon auszugehen ist, dass bei einem im Heckbereich eines Fahrzeugs angeordneten, mit seiner Gehäuselängsachse in Fahrzeugquerrichtung orientierten Abgasschalldämpfer eine Krafteinleitung bei einem Heckaufprall im Wesentlichen in der Fahrzeuglängsrichtung erfolgen wird, entspricht die Abflachungsrichtung im Wesentlichen einer Fahrzeuglängsrichtung.

Weiter kann vorgesehen sein, dass wenigstens eine Stirnwandung wenigstens einen Soll-Verformungsbereich aufweist.

Während bei dem aus dem Stand der Technik bekannten Abgasschalldämpfer im Inneren des Schalldämpfergehäuses vorgesehene Komponenten, insbesondere Zwischenwandungen, verformungsweich gestaltet sind, ist bei dem erfindungsgemäßen Abgasschalldämpfer durch das Bereitstellen wenigstens eines Soll-Verformungsbereichs in wenigstens einer Stirnwandung, vorzugsweise bei beiden Stirnwandungen, dafür gesorgt, dass bereits das Schalldämpfergehäuse an sich bei einer Krafteinleitung vergleichsweise leicht zu verformen ist und somit einen wesentlichen Anteil der in dieses eingeleiteten Energie absorbiert. Dies mindert die Gefahr, dass beispielsweise bei einem Heckaufprall der Abgasschalldämpfer in einem Fahrzeug so weit verschoben bzw. verformt wird, dass er mit anderen im Bereich des Abgasschalldämpfers vorhandenen Systembereichen eines Fahrzeugs, beispielsweise einem Kraftstofftank, kollidiert.

Wenigstens ein Soll-Verformungsbereich kann wenigstens einen zur Gehäuselängsachse nicht orthogonalen Wandungsbereich umfassen, was dazu führt, dass ein derartiger Wandungsbereich bei Orientierung der Gehäuselängsachse in Fahrzeugquerrichtung auch zur Fahrzeuglängsrichtung und somit zur Krafteinleitungsrichtung bei einem Heckaufprall angewinkelt ist. Beispielsweise kann ein derartiger Wandungsbereich wölbungsartig, wellenartig, sickenartig oder Z-artig ausgebildet sein. Auch Kombinationen derartiger Formgebungen, die zu einer vergleichsweise leichten Verformbarkeit eines derartigen Wandungsbereichs bzw. einer damit ausgebildeten Stirnwandung beitragen, sind möglich.

Gemäß einem weiteren Aspekt der vorliegenden Erfindung-wird vorgeschlagen, dass ein Auslassrohr wenigstens eine im Schalldämpferinnenraum angeordnete Zwischenwandung durchsetzt und vermittels wenigstens eines zur Gehäuselängsachse angewinkelten Abstützorgans bezüglich wenigstens einer Zwischenwandung abgestützt ist, oder/und dass wenigstens eine Zwischenwandung bezüglich des Gehäusemantels vermittels einer Zwischenwandungsverkippformation abgestützt ist.

Durch das Abstützen eines Auslassrohrs bezüglich einer Zwischenwandung über ein zur Gehäuselängsachse angewinkeltes Abstützorgan wird bei Belastung des Auslassrohrs in der Fahrzeuglängsrichtung, also im Wesentlichen orthogonal zur Gehäuselängsachse des Schalldämpfergehäuses, eine Kraft in eine Zwischenwandung eingeleitet, welche die Verformung der Zwischenwandung unterstützt, selbst wenn die Zwischenwandung selbst nicht mit eine leichte Verformung derselben gewährleistenden Formationen, wie sie beispielsweise aus dem Stand der Technik bekannt sind, ausgebildet ist. Bei einer alternativ oder zusätzlich an einer derartigen Zwischenwandung zu realisierenden Ausgestaltung kann vorgesehen sein, dass diese bei Krafteinleitung durch die Zwischenwandungsverkippformation in ihrer Gesamtheit bezüglich des Schalldämpfergehäuses verkippt wird, was zu einer Verminderung der Gesamtsteifigkeit des Schalldämpfergehäuses bzw. zu einem verbesserten Energieabbau beiträgt.

Der Abgasschalldämpfer kann derart aufgebaut sein, dass das Auslassrohr die wenigstens eine Zwischenwandung mit einem zur Gehäuselängsachse im Wesentlichen parallel verlaufenden Auslassrohrbereich durchsetzt, oder/und dass die Zwischenwandungsverkippformation wenigsten einen, vorzugsweise mehrere bezüglich der Gehäuselängsachse angewinkelte Zwischenwandungsabstützflächenbereiche am Gehäusemantel umfasst.

Gemäß einem weiteren Aspekt wird vorgeschlagen, dass wenigstens ein Einlassrohr und wenigstens ein Auslassrohr oder/und wenigstens ein Zwischenrohr in einer ersten Versatzrichtung im Wesentlichen quer zur Gehäuselängsachse und einer zur ersten Versatzsichtung im Wesentlichen orthogonalen zweiten Versatzrichtung im Wesentlichen quer zur Gehäuselängsachse zueinander versetzt sind. Auch der Versatz eines Einlassrohrs bezüglich eines Auslassrohrs derart, dass diese in einer Krafteinleitungsrichtung nicht unmittelbar aufeinander folgend angeordnet sind, unterstützt die leichte Verformbarkeit und somit den Energieabbau im Abgasschalldämpfer bei einem Aufprall.

Gemäß einem weiteren Erfindungsaspekt wird vorgeschlagen, dass der Gehäusemantel im Wesentlichen orthogonal zu einer Fahrzeuglängsrichtung zu positionierende, im wesentlichen planare Seitenwandungen umfasst.

Durch das Ausgestalten des Gehäusemantels mit im Wesentlichen planaren, also im Wesentlichen ungekrümmten Seitenwandungen, die orthogonal zur Fahrzeuglängsrichtung positioniert sind, also im Wesentlichen in der Fahrzeugquerrichtung und der Fahrzeughöhenrichtung ausgedehnt sind, wird bei Krafteinleitung in der Fahrzeuglängsrichtung eine vergleichsweise leichte Verformbarkeit des Schalldämpfergehäuses bzw. des Gehäusemantels desselben gewährleistet.

Da im Allgemeinen davon auszugehen ist, dass bei einem im Heckbereich eines Fahrzeugs angeordneten, mit seiner Gehäuselängsachse in Fahrzeugquerrichtung orientierten Abgasschalldämpfer eine Krafteinleitung bei einem Heckaufprall im Wesentlichen in der Fahrzeuglängsrichtung erfolgen wird, wird vorgeschlagen, die erste Versatzrichtung im Wesentlichen einer Fahrzeuglängsrichtung entspricht, oder/und dass die zweite Versatzrichtung im Wesentlichen einer Fahrzeughöhenrichtung entspricht.

Das abgeflachte Querschnittsprofil kann ein rundes Querschnittsprofil, vorzugsweise oval oder elliptisch, oder kann ein im Wesentlichen rechteckiges Querschnittsprofil sein.

Gemäß einem weiteren Erfindungsaspekt wird vorgeschlagen, dass wenigstens ein Einlassrohr oder/und wenigstens ein Auslassrohr wenigstens einen Soll-Verformungsbereich aufweist. Das Bereitstellen eines oder mehrerer Soll-Verformungsbereiche an Einlass- bzw. Auslassrohren führt dazu, dass im Bereich derartiger Rohre bei Krafteinleitung eine Verformung relativ leicht zu erreichen ist, was zum Energieabbau beiträgt und die Gefahr mindert, dass über derartige Rohre Kräfte auf andere Systembereiche eines Abgasführungssystems weitergeleitet werden.

Dabei kann beispielsweise vorgesehen sein, dass wenigstens ein Soll-Verformungsbereich einen wellenartig oder balgenartig ausgebildeten Längenbereich oder/und einen mit Schlitzen ausgebildeten Längenbereich oder/und einen mit einer Einbuchtung oder Ausbuchtung ausgebildeten Längenbereich oder/und einen mit einem abgeflachten Querschnittsprofil ausgebildeten Längenbereich oder/und einen bezüglich einer Fahrzeuglängsrichtung sich angewinkelt erstreckenden Längenbereich umfasst.

Eine besonders effiziente Ausnutzung der in einem derartigen Soll-Verformungsbereich bereitgestellten Energieabbaukapazität kann dadurch erreicht werden, dass wenigstens ein Auslassrohr einen im Wesentlichen in Richtung der Gehäuselängsachse sich erstreckenden Längenbereich und einen Übergangsbereich zu einem im Wesentlichen orthogonal zur Gehäuselängsachse sich erstreckenden Längenbereich umfasst, und dass im Übergangsbereich wenigstens ein Soll-Verformungsbereich vorgesehen ist.

Gemäß einem weiteren Erfindungsaspekt wird vorgeschlagen, dass wenigstens ein Auslassrohr einen außerhalb des Schalldämpfergehäuses im Wesentlichen orthogonal zur Gehäuselängsachse sich erstreckenden Längenbereich umfasst, und dass ein Verhältnis einer Querschnittsabmessung, vorzugsweise Durchmesser, dieses Längenbereichs zu einem Abstand dieses Längenbereichs zu einer von dem Auslassrohr durchsetzten Stirnwandung im Bereich von 0,1 bis 0,2 liegt.

Bei derartiger Ausgestaltung des Abgasschalldämpfers wird ein vergleichsweise großer Wirkhebel im Bereich eines Auslassrohrs gewährleistet, so dass bereits vergleichsweise kleine Kräfte aufgrund des großen Wirkhebels eine Verformung im Abgasschalldämpfer und damit einen Energieabbau bewirken können, um somit die Gefahr, dass der Abgasschalldämpfer in seiner Gesamtheit in einem Fahrzeug verschoben wird, zu mindern.

Gemäß einem weiteren Erfindungsaspekt kann vorgesehen sein, dass wenigstens ein Einlassrohr oder/und wenigstens ein Auslassrohr oder/und wenigstens ein Zwischenrohr wenigstens eine im Schalldämpferinnenraum vorgesehene Zwischenwandung im Bereich einer Rohrdurchgangsöffnung durchsetzt, und dass in der Zwischenwandung wenigstens eine nicht von einem Rohr durchsetzte Öffnung vorgesehen ist oder/und wenigstens eine Rohrdurchgangsöffnung eine Öffnungsquerschnittsfläche aufweist, die größer ist, als eine Querschnittsfläche des diese Rohrdurchgangsöffnung durchsetzenden Rohrs.

Durch das Bereitstellen derartiger Öffnungen bzw. Rohrdurchgangsöffnungen wird im Bereich einer Zwischenwandung eine Schwächung erzeugt, welche bei Krafteinleitung in ein Fahrzeug bzw. einen Abgasschalldämpfer eine vergleichsweise leichte Verformbarkeit einer so aufgebauten Zwischenwandung und somit eine geringere Steifigkeit des Abgasschalldämpfers mit sich bringt.

Dabei kann beispielsweise vorgesehen sein, dass wenigstens eine Öffnung oder/und wenigstens eine Rohrdurchgangsöffnung eine runde Öffnungsquerschnittsgeometrie, vorzugsweise oval oder elliptisch, aufweist. Eine weitere, die leichtere Verformbarkeit unterstützende Schwächung einer Zwischenwandung kann dadurch erreicht werden, dass ausgehend von wenigstens einer Öffnung oder/und wenigstens einer Rohrdurchgangsöffnung wenigstens ein vorzugsweise schlitzartiger Schwächungsbereich in einer Zwischenwandung vorgesehen ist. Insbesondere kann dabei vorgesehen sein, dass durch wenigstens zwei Schwächungsbereiche eine Verformungslasche bereitgestellt ist.

Gemäß einem weiteren Erfindungsaspekt wird vorgeschlagen, dass das Schalldämpfergehäuse vermittels wenigstens eines bezüglich der Gehäuselängsachse angewinkelt sich erstreckenden Abstützorgans bezüglich einer Trägerstruktur abgestützt oder abstützbar ist. Ein derart angewinkelt bezüglich der Gehäuselängsachse und somit bei einem quer eingebauten Abgasschalldämpfer sich auch angewinkelt bezüglich der Fahrzeuglängsrichtung erstreckendes Abstützorgan führt dazu, dass bei Krafteinleitung in Fahrzeuglängsrichtung die in diese Richtung auf das Schalldämpfergehäuse weitergeleitete Kraftkomponente, welche auch zu einer Verschiebung des Abgasschalldämpfers in der Fahrzeuglängsrichtung führen kann, gemindert ist.

Um diesen Effekt auch durch eine vergleichsweise leichte Verformbarkeit des Abgasschalldämpfers, insbesondere des Schalldämpfergehäuses desselben, zu unterstützen, wird weiter vorgeschlagen, dass im Gehäuseinnenraum wenigstens eine Zwischenwandung vorgesehen ist, und dass ein Abstand der wenigstens einen Zwischenwandung zu einem Abstützbereich des wenigstens einen Abstützorgans bezüglich des Schalldämpfergehäuses in Richtung der Gehäuselängsachse wenigstens 50 mm beträgt.

Die vorliegende Erfindung betrifft ferner ein Kraftfahrzeug mit einem erfindungsgemäß aufgebauten Abgasschalldämpfer, wobei der Abgasschalldämpfer vorzugsweise in einem Heckbereich des Kraftfahrzeugs mit im Wesentlichen in einer Fahrzeugquerrichtung orientierter Gehäuselängsachse des Schalldämpfergehäuses angeordnet ist.

Die vorliegende Erfindung wird nachfolgend mit Bezug auf die beiliegenden Figuren detailliert beschrieben. Es zeigt:
- Fig. 1: eine Prinzipdarstellung eines mit einem quer eingebauten Abgasschalldämpfer ausgestatteten Fahrzeugs;
- Fig. 2: eine Prinzipdarstellung eines Abgasschalldämpfers zum Quereinbau in ein Fahrzeug;
- Fig. 3: eine prinzipartige Querschnittdarstellung eines Abgasschalldämpfers;
- Fig. 4: eine weitere prinzipartige Querschnittdarstellung eines Abgasschalldämpfers;
- Fig. 5: eine prinzipartige Draufsicht auf einen Abgasschalldämpfer.

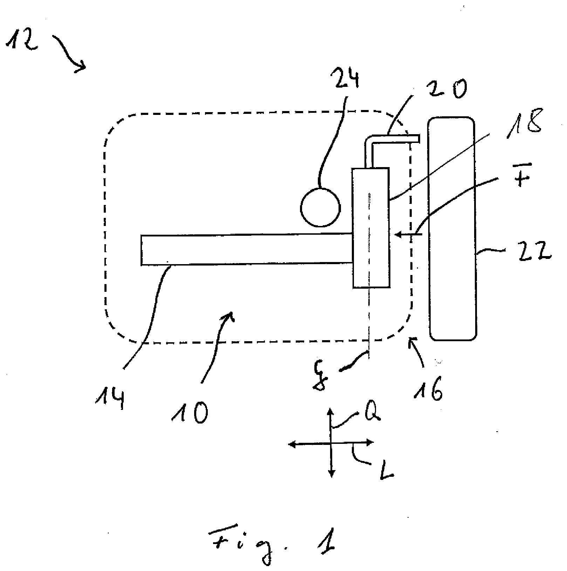

In Fig. 1 ist ein mit einem Abgasführungssystem 10 ausgestattetes Fahrzeug allgemein mit 12 bezeichnet. Das Abgasführungssystem 10 umfasst einen beispielsweise an einem Fahrzeugchassis oder Rahmen getragenen, in einer Fahrzeuglängsrichtung L sich erstreckenden Abgasführungsstrang 14 und einen in einem Heckbereich 16 des Fahrzeugs einen mit einer Gehäuselängsachse G sich im Wesentlichen in einer Fahrzeugquerrichtung Q erstreckend eingebauten Abgasschalldämpfer 18. Die durch den Abgasschalldämpfer 18 hindurchströmenden Abgase verlassen das Abgasführungssystem durch ein allgemein auch als Endrohr bezeichnetes Auslassrohr 20.

Bei einem Heckaufprall eines Hindernisses 22, beispielsweise eines anderen Fahrzeugs, wird im Allgemeinen eine Kraft F in das Fahrzeug 12 bzw. den Heckbereich 16 desselben eingeleitet, die eine wesentliche Erstreckungskomponente parallel zur Fahrzeuglängsrichtung L aufweisen wird. Durch eine derartige in den Heckbereich 16 eingeleitete Kraft F besteht die Gefahr, dass das Abgasführungssystem 10, insbesondere der im Heckbereich 16 positionierte Abgasschalldämpfer 18, im Fahrzeug 12 verschoben wird und mit anderen Systembereichen des Fahrzeugs, beispielsweise einem Tank 24, kollidiert. Um dies zu vermeiden, werden nachfolgend Ausgestaltungsaspekte beschrieben, welche im Bereich des Abgasschalldämpfers 18 für eine leichtere Verformbarkeit desselben sorgen, so dass bei Einleitung einer Kraft F insbesondere im Wesentlichen in Richtung der Fahrzeuglängsrichtung L Energie im Abgasschalldämpfer 18 absorbiert wird und die Gefahr, dass dieser in übermäßigem Ausmaß im Fahrzeug 12 verschoben wird, gemindert ist.

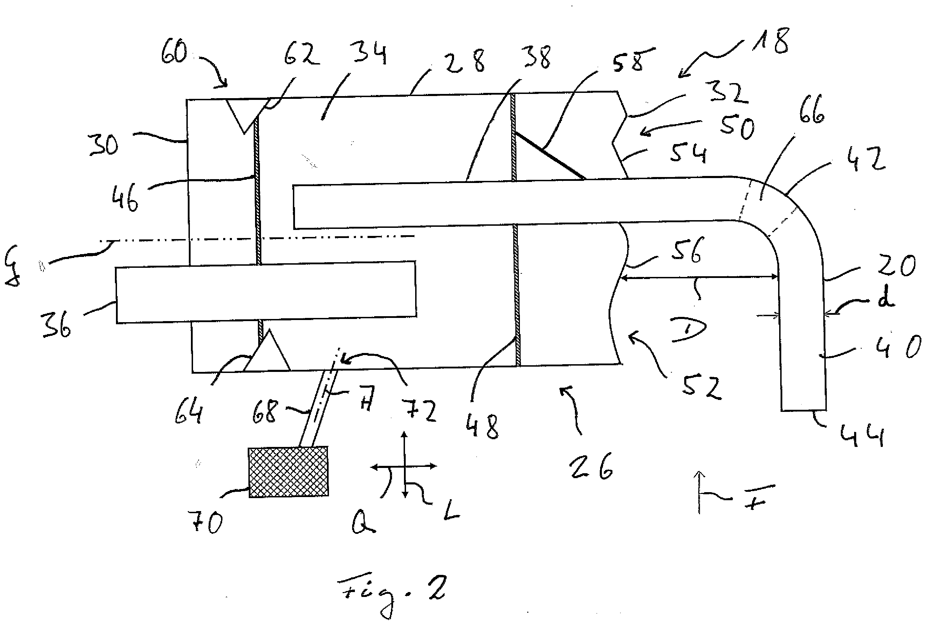

In Fig. 2 ist der Abgasschalldämpfer 18 in prinzipartiger Draufsichtdarstellung gezeigt. Der Abgasschalldämpfer 18 umfasst ein Schalldämpfergehäuse 26 mit einem beispielsweise im Wesentlichen zylindrisch gestalteten, in Richtung einer Gehäuselängsachse G langgestreckten Gehäusemantel 28. An seinen beiden in Richtung der Gehäuselängsachse G gelegenen Endbereichen ist der Gehäusemantel 28 mit jeweiligen Stirnwandungen 30 bzw. 32 beispielsweise durch materialschlüssige Verbindung fest verbunden. Der Gehäusemantel 28 umschließt zusammen mit den beiden Stirnwandungen 30, 32 einen Schalldämpferinnenraum 34.

Ein Auslass- oder Einlassrohr 36 führt beispielsweise durch die Stirnwandung 30 hindurch in den Schalldämpferinnenraum 34. Das bereits auch in Fig. 1 erkennbare Auslassrohr 20 führt durch die Stirnwandung 32 hindurch aus dem Schalldämpferinnenraum 34 heraus. Bei einer alternativen Ausgestaltung kann das Einlassrohr 36 sich durch den Gehäusemantel 28 hindurch in den Schalldämpferinnenraum 34 hinein erstrecken, so dass das Einlassrohr 36 mit seinem in den Schalldämpferinnenraum 34 führenden Längenbereich nicht, wie in Fig. 2 dargestellt, im Wesentlichen in der Fahrzeugquerrichtung Q sich erstreckend liegt, sondern im Wesentlichen in der Fahrzeuglängsrichtung L sich erstreckt.

Das Auslassrohr 20 umfasst einen im Wesentlichen in Richtung der Gehäuselängsachse G sich erstreckenden Längenbereich 38, welcher auch die Stirnwandung 32 durchsetzt, und umfasst einen im Wesentlichen orthogonal zur Gehäuselängsachse G und damit auch zur Fahrzeugquerrichtung Q, in Richtung der Fahrzeuglängsachse L orientierten Längenbereich 40. In einem gekrümmten Übergangsbereich 42 geht der Längenbereich 38 in den Längenbereich 40 über. An dem außerhalb des Schalldämpferinnenraums 34 gelegenen Ende 44 des Auslassrohrs 20 können die von einer Brennkraftmaschine generierten Verbrennungsabgase das Abgasführungssystem 10 zur Umgebung hin verlassen.

Im Schalldämpferinnenraum 34 sind in Richtung der Gehäuselängsachse G im dargestellten Beispiel zwei Zwischenwandungen 46, 48 angeordnet. Diese sind in ihrem Außenumfangsbereich an den Gehäusemantel 28 angebunden. Bei in Richtung der Gehäuselängsachse G orientiertem Einlassrohr 36 kann dieses auch die der Stirnwandung 30 näher liegende Zwischenwandung 46 durchsetzen. Der Längenbereich 38 des Auslassrohrs 20 durchsetzt im dargestellten Beispiel nicht nur die Stirnwandung 32, sondern auch die Zwischenwandung 48. Durch die Zwischenwandungen 46, 48 wird der Schalldämpferinnenraum 34 in mehrere Volumenbereiche unterteilt, welche zum Teil von den Abgasen durchströmbar sind, zum Teil im Wesentlichen auch zur Bereitstellung einer Schalldämpfungsfunktion vorgesehen bzw. ausgestaltet sind. Es sei darauf hingewiesen, dass im Schalldämpferinnenraum 34 auch mehr als zwei Zwischenwandungen oder ggf. nur eine einzige Zwischenwandung vorgesehen sein können. Ferner können bei einem Aufbau, bei welchem das Einlassrohr 36 sich durch den Gehäusemantel 28 hindurch in den Schalldämpferinnenraum 34 erstreckt, im Schalldämpferinnenraum 34 ein bzw. mehrere Zwischenrohre vorgesehen sein, welche durch Zwischenwandungen voneinander getrennte Volumenbereiche verbinden. Derartige Zwischenrohre können beispielsweise im Wesentlichen in Richtung der Gehäuselängsachse G sich erstrecken, also im Wesentlichen parallel zum Längenbereich 38 des Auslassrohrs 20 angeordnet sein.

Alle vorangehend beschriebenen Komponenten des Abgasschalldämpfers 18, also der Gehäusemantel 28, die Stirnwandungen 30, 32, das Einlassrohr 36, das Auslassrohr 20 sowie die Zwischenwandungen 46, 48 sind vorzugsweise aus Metallmaterial, insbesondere Blechmaterial, aufgebaut. Derartiges Material gewährleistet grundsätzlich bei Einleitung einer ausreichend großen Kraft eine Verformbarkeit des Abgasschalldämpfers. Um bei Einleitung einer im Wesentlichen in der Fahrzeuglängsrichtung L orientierten Kraft F beispielsweise bei einem Heckaufprall eines anderen Fahrzeugs durch eine vergleichsweise leichte Verformbarkeit des Abgasschalldämpfers zum Energieabbau beizutragen und somit die Gefahr zu mindern, dass der Abgasschalldämpfer 18 im Fahrzeug 12 verschoben wird, ist dieser mit verschiedenen nachfolgend detailliert erläuterten Ausgestaltungsaspekten aufgebaut. Diese können für sich einzeln an einem Abgasschalldämpfer realisiert sein, können jedoch auch in beliebiger Kombination miteinander vorgesehen sein.

Man erkennt in Fig. 2, dass die vom Auslassrohr 20 durchsetzte Stirnwandung 32, anders als die Stirnwandung 30, nicht in allen Bereichen zur Gehäuselängsachse G im Wesentlichen orthogonal orientiert angeordnet ist, sondern einen bzw. mehrere Soll-Verformungsbereiche 50, 52 aufweist. In diesen Soll-Verformungsbereichen 50, 52 ist die Stirnwandung 32 mit einem bzw. mehreren zur Gehäuselängsachse G nicht orthogonal orientierten, sondern bezüglich der Gehäuselängsachse G angewinkelten Wandungsbereichen 54, 56 aufgebaut. Durch das Bereitstellen derartiger Wandungsbereiche wird bei Einleitung einer im Wesentlichen in der Fahrzeuglängsrichtung L orientierten Kraft F eine vergleichsweise leichte Verformbarkeit der Stirnwandung 32 erreicht, so dass das Schalldämpfergehäuse 26 an sich weniger steif ist. Eine entsprechende Ausgestaltung kann selbstverständlich auch im Bereich der anderen Stirnwandung 30 vorgesehen sein, unabhängig davon, ob das Einlassrohr 36 sich durch diese hindurch erstreckt oder nicht.

Die Soll-Verformungsbereiche 50, 52 können in verschiedenster Ausgestaltung aufgebaut sein. So können diese, wie im Fall des Soll-Verformungsbereichs 50, mit zickzackartiger Ausgestaltung oder mit, wie im Bereich des Verformungsbereichs 52, wellenartiger Ausgestaltung aufgebaut sein. Auch das Einbringen einer Wölbung, von Sicken oder ein allgemein Z-artiger Verlauf bzw. eine balgenartige Ausgestaltung eines oder mehrerer Soll-Verformungsbereiche ist möglich. Diese Soll-Verformungsbereiche 50, 52 können im Wesentlichen über die gesamte Stirnwandung 32 ausgedehnt sein, können jedoch alternativ auch nur Flächenbereiche derselben erfassen, beispielsweise den vom Auslassrohr 20 durchsetzten Bereich.

Ein weiterer zur Minderung der Gesamtsteifigkeit des Abgasschalldämpfers beitragender Aspekt umfasst das Bereitstellen eines als Abstützorgan wirkenden Kraftumlenkelements 58. Dieses stabartig, stangenartig oder plattenartig, vorzugsweise aus Blechmaterial aufgebaute Kraftumlenkelement 58 ist zur Gehäuselängsachse G angewinkelt orientiert und ist am Längenbereich 38 des Auslassrohrs 20 einerseits und an der vom Längenbereich 38 durchsetzten Zwischenwandung 48 andererseits beispielsweise durch Materialschluss oder/und Formschluss festgelegt. Bei Einleitung einer Kraft F in Fahrzeuglängsrichtung L insbesondere in das Auslassrohr 20, beispielsweise am Bereich 44 desselben, entsteht auch unterstützt durch die vergleichsweise leichte Verformbarkeit der Stirnwandung 32 durch das Bereitstellen eines oder mehrerer Soll-Verformungsbereiche 50, 52 ein Kippmoment am Auslassrohr 20, durch welches dieses zur Verkippung um den Anbindungsbereich desselben an die Zwischenwandung 48 im Wesentlichen in einer durch die Fahrzeuglängsrichtung L und die Fahrzeugquerrichtung Q aufgespannten Ebene belastet wird. In der Darstellung der Fig. 2 entspricht dies einer Verkippung im Gegenuhrzeigersinn. Dabei wird durch das bezüglich der Gehäuselängsachse G angewinkelte Kraftumlenkelement 58 eine Kraft in die Zwischenwandung 48 eingeleitet, welche die Zwischenwandung 48 belastet und zu einer Verformung derselben führt. Obgleich die Zwischenwandung 48 beispielsweise im Wesentlichen planar ausgebildet ist und zur Gehäuselängsachse G beispielsweise im Wesentlichen orthogonal orientiert angeordnet ist, kann somit eine in der Fahrzeuglängsrichtung L in das Auslassrohr 20 eingeleitete Kraft effizient zur Verformung der Zwischenwandung 48 beitragen, so dass die Gefahr, dass der Abgasschalldämpfer 18 in seiner Gesamtheit in der Fahrzeuglängsrichtung L in substantiellem Ausmaß verschoben wird, gemindert ist.

Eine weitere im Bereich der Zwischenwandungen 46, 48 einsetzbare Ausgestaltung zum Mindern der Steifigkeit des Abgasschalldämpfers 18 ist im Zusammenhang mit der Zwischenwandung 46 dargestellt, gleichwohl jedoch auch oder alternativ in Verbindung mit anderen Zwischenwandungen einsetzbar. Die Zwischenwandung 46 ist bezüglich des Schalldämpfergehäuses 26 über eine allgemein mit 60 bezeichnete Zwischenwandungsverkippformation abgestützt. Diese kann sich über den gesamten Umfang erstrecken oder auf bestimmte Umfangsbereiche beschränkt sein und beispielsweise durch Ausformungen im Gehäusemantel 28 oder durch das Anbringen separater Bauteile bereitgestellte, bezüglich der Gehäuselängsachse G angewinkelte Zwischenwandungsabstützflächenbereiche 62, 64 umfassen. Die beispielsweise bezüglich der Gehäuselängsachse G einander diametral gegenüberliegenden Zwischenwandungsabstützbereiche 62, 64 sind einander entgegengesetzt orientiert angeordnet bzw. angewinkelt. Bei Einleitung einer Kraft F in Richtung der Fahrzeuglängsachse L in den Gehäusemantel 28 erzeugen diese Zwischenwandungsabstützflächenbereiche 62, 64 aufgrund ihrer Schrägstellung bezüglich der Gehäuselängsachse G und somit auch aufgrund ihrer Schrägstellung bezüglich der Richtung der Kraft F ein Kippmoment, welches die gesamte Zwischenwandung 46 im Schalldämpferinnenraum 34 im dargestellten Beispiel im Uhrzeigersinn verkippt. Diese Verkippung führt dazu, dass die Zwischenwandung 46 ihre den Gehäusemantel 28 versteifende Eigenschaft zumindest teilweise verliert und somit der Gehäusemantel 28 leichter verformbar ist. In Umfangsbereichen außerhalb der Zwischenwandungsabstützflächenbereiche 62, 64 kann die Zwischenwandung 46 unmittelbar an den Gehäusemantel 28 anschließen bzw. angrenzen und an diesem beispielsweise durch Formschluss oder/und Materialschluss festgelegt sein.

Gemäß einem weiteren Aspekt der vorliegenden Erfindung kann der Abgasschalldämpfer 18 so gestaltet sein, dass ein Verhältnis einer Querschnittsabmessung, beispielsweise des Außendurchmessers d, des Längenbereichs 40 zu einem Abstand D zwischen dem im Wesentlichen in der Fahrzeuglängsrichtung L sich erstreckenden Längenbereich 40 des Auslassrohrs 20 und der vom Auslassrohr 20 durchsetzten Stirnwandung 32 im Bereich von 0,1 bis 0,2 liegt. Eine derartige Ausgestaltung sorgt dafür, dass bei Einleitung einer Kraft F in den Längenbereich 40 des Auslassrohrs 20 ein ausreichend großer Hebel und somit ein ausreichend großes Drehmoment generiert wird, welches eine Verformung des Schalldämpfergehäuses 26 insbesondere im Bereich der Stirnwandung 32 oder/und im Bereich der Zwischenwandung 48 ermöglicht. Dabei können vorteilhafterweise die Stirnwandung 32 so wie vorangehend beschrieben ausgestaltet sein bzw. das Kraftumlenkelement 58 vorgesehen sein, um auch eine leichtere Verformbarkeit der Zwischenwandung 48 zu erzielen.

Die leichtere Verformbarkeit des Auslassrohrs 20 an sich kann dadurch unterstützt werden, dass dieses einen oder mehrere Soll-Verformungsbereiche 66 aufweist. Im dargestellten Beispiel ist ein derartiger Soll-Verformungsbereich 66 beispielsweise im Übergangsbereich 42 zwischen den beiden im Wesentlichen geradlinig sich erstreckenden Längenbereichen 38, 40 vorgesehen. Der Soll-Verformungsbereich 66 kann beispielsweise einen Bereich mit bezüglich einer kreisrunden Querschnittsgeometrie abgeflacht runder Querschnittsgeometrie, beispielsweise elliptisch oder oval gestalteter Querschnittsgeometrie, sein. Durch dieses Abweichen von einer in sich vergleichsweise steifen kreisrunden Querschnittsgeometrie wird die leichtere Verformbarkeit des Auslassrohrs 20 und somit dessen Knicken bei Krafteinleitung beispielsweise im Übergangsbereich 42 erreicht. Es sei darauf hingewiesen, dass auch andere Ausgestaltungen eines derartigen Soll-Verformungsbereichs realisiert sein können. Beispielsweise kann ein derartiger Soll-Verformungsbereich eine balgenartige, eine gewellte oder eine zickzackartige Ausgestaltung eines Längenabschnitts des Einlassrohrs 20 umfassen. Auch das Bereitstellen einer seitlichen Ausbuchtung des gesamten Einlassrohrs 20, seitlich bezogen auf dessen Erstreckungsrichtung, ist möglich. Ein wesentlicher Vorteil des Bereitstellens eines derartigen Soll-Verformungsbereichs 66 am Auslassrohr 20 ist, dass eine verringerte Steifigkeit des gesamten Abgasschalldämpfers 18 ohne spezielle Ausgestaltungsmerkmale des Schalldämpfergehäuses 26 erreicht werden kann.

In Fig. 2 ist ferner ein allgemein mit 68 bezeichnetes, beispielsweise aus Blechmaterial oder dergleichen aufgebautes Abstützorgan erkennbar. Vermittels dieses Abstützorgans 68 ist der Abgasschalldämpfer 18 bzw. das Schalldämpfergehäuse 26 bezüglich einer symbolisch dargestellten Trägerstruktur 70, beispielsweise einem Fahrzeugrahmen, getragen bzw. abgestützt. Eine Abstützorganlängsachse A ist derart orientiert, dass sie bezüglich der Gehäuselängsachse G angewinkelt, also insbesondere nicht orthogonal sich erstreckend orientiert ist. Dabei müssen nicht notwendigerweise die beiden Achsen A und G in einer Ebene liegen. Durch diese Anwinkelung bezüglich der Gehäuselängsachse G ist die Abstützorganlängsachse A auch bezüglich der Fahrzeuglängsrichtung L und der Fahrzeugquerrichtung Q angewinkelt. Wird eine Kraft F in den Heckbereich 16 eines Fahrzeugs 12 eingeleitet, so führt dies dazu, dass bei entsprechender Beaufschlagung des Schalldämpfergehäuses 26 über die Trägerstruktur 70 und das Abstützorgan 68 die in Richtung der Fahrzeuglängsrichtung L orientierte Kraftkomponente gemindert ist und somit auch die den Abgasschalldämpfer 18 in diese Richtung verschiebende Kraft entsprechend gemindert ist. Dabei ist es vorteilhaft, wenn im Schalldämpferinnenraum 34 vorgesehene Zwischenwandungen 46, 48 in der Richtung der Gehäuselängsachse G einen ausreichend großen Abstand zu dem Bereich 72 aufweisen, in welchem das Abstützorgan 68 beispielsweise am Gehäusemantel 28 abgestützt ist. Vorzugsweise sollte dieser Abstand wenigstens 50 mm betragen. Somit wird gewährleistet, dass die in das Schalldämpfergehäuse 26 eingeleitete Kraft in einen Bereich des Gehäusemantels 28 eingeleitet wird, in welchem diese nicht durch eine im Schalldämpferinnenraum 34 vorgesehene Zwischenwandung versteift ist.

Es sei darauf hingewiesen, dass selbstverständlich das Schalldämpfergehäuse 26 durch mehrere derartige bezüglich der Gehäuselängsachse G angewinkelte Abstützorgane an einer Trägerstruktur abgestützt bzw. getragen sein kann. Dabei können derartige Abstützorgane 68 in der Fahrzeuglängsrichtung L vor dem Schalldämpfergehäuse 26 angeordnet sein, oder hinter dem Schalldämpfergehäuse. Besonders vorteilhaft kann der Effekt der verminderten Krafteinleitung jedoch genutzt werden, wen ein derartiges oder mehrere derartige Abstützorgane 68 hinter dem Schalldämpfergehäuse 26 liegend positioniert sind.

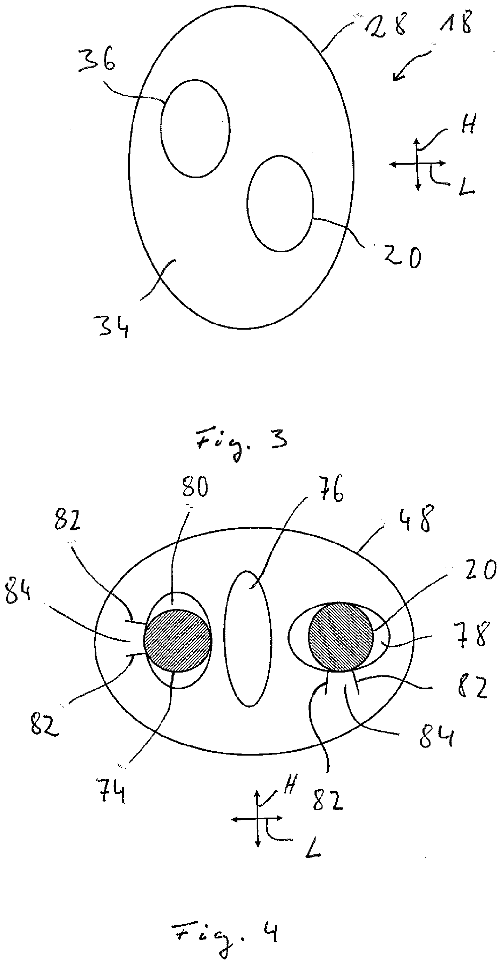

Ein erfindungsgemäß vorzusehender, zur Verminderung der Steifigkeit des Abgasschalldämpfers 18 beitragender Ausgestaltungsaspekt ist in Fig. 3 erkennbar. Die Fig. 3 zeigt in prinzipieller Art den Abgasschalldämpfer 18 mit seinem Gehäusemantel 28 und zwei im Schalldämpferinnenraum 34 sich erstreckenden Rohren, also beispielsweise dem Auslassrohr 20 und dem Einlassrohr 36 oder einem anstelle des Einlassrohrs 36 im Schalldämpferinnenraum 34 im Wesentlichen parallel zum Auslassrohr 20 sich erstreckenden Zwischenrohr. Die beiden Rohre 20, 36 sind in einer im dargestellten Beispiel der Fahrzeuglängsrichtung L entsprechenden Abflachungsrichtung abgeflacht, gleichwohl jedoch mit rundem Querschnittsprofil ausgestaltet. Beispielsweise können die Rohre 20, 36 mit elliptischem bzw. ovalem Querschnittsprofil ausgestaltet sein. In entsprechender Weise ist der Gehäusemantel 28 in einer der Fahrzeuglängsrichtung L entsprechenden Abflachungsrichtung abgeflacht, beispielsweise ebenfalls mit elliptischem oder ovalem, grundsätzlich jedoch rundem Querschnittsprofil abgeflacht. Die Rohre 20, 36 und auch der Gehäusemantel 28 weisen somit in Richtung einer Fahrzeughöhenrichtung H, welche zur Fahrzeuglängsrichtung L und zur Fahrzeugquerrichtung Q im Wesentlichen orthogonal steht, eine größere Erstreckungslänge auf, als in der Fahrzeuglängsrichtung L. Bei Einleitung einer Kraft in der Fahrzeuglängsrichtung L sind somit die Rohre 20, 36 und auch der Gehäusemantel 28 vergleichsweise leicht verformbar. Es sei hier darauf hingewiesen, dass auch nur eines der Rohre oder/und nur der Gehäusemantel 28 mit derartig abgeflachtem Querschnittsprofil ausgebildet sein kann. Grundsätzlich gilt jedoch, dass je größer der Radius derjenigen Umfangsbereiche, welche in der Fahrzeuglängsrichtung L nach vorne bzw. nach hinten orientiert liegen, und je kleiner die Radien derjenigen Bereichen, welche im Wesentlichen in der Fahrzeughöhenrichtung H orientiert liegen, desto geringer ist die Steifigkeit der so aufgebauten Komponente, also beispielsweise des Gehäusemantels 28 bzw. der Rohre 20, 36, in der Fahrzeuglängsrichtung L.

Gemäß einem weiteren in Fig. 3 erkennbaren Ausgestaltungsaspekt sind die in dem Schalldämpferinnenraum 34 sich im Wesentlichen parallel zueinander und in Richtung der Gehäuselängsachse G erstreckenden Rohre, hier also beispielsweise das Auslassrohr 20 und das Einlassrohr 36 oder ein parallel zum Auslassrohr 20 oder/und zum Einlassrohr 36 sich erstreckendes Zwischenrohr in einer der Fahrzeuglängsrichtung L entsprechenden ersten Versatzrichtung und einer dazu orthogonalen, im Wesentlichen der Fahrzeughöhenrichtung H entsprechenden zweiten Versatzrichtung zueinander versetzt. Bei Krafteinleitung in Richtung der Fahrzeuglängsrichtung L liegen somit die so angeordneten Rohre nicht in einer Ebene, so dass die Gefahr einer die Verformbarkeit des Abgasschalldämpfers 18 beeinträchtigenden Kollision derartiger Rohre gemindert ist.

Weitere zur Minderung der Steifigkeit des Abgasschalldämpfers beitragende Ausgestaltungsaspekte sind in Fig. 4 dargestellt. Gemäß einem ersten in Fig. 4 erkennbaren Aspekt kann in einer von zueinander beispielsweise parallel sich erstreckenden Rohren, beispielsweise dem Einlassrohr 36, einem Zwischenrohr 74 bzw. dem Auslassrohr 20 durchsetzten Zwischenwandung, beispielsweise der Zwischenwandung 48, eine allgemein zur Schwächung dieser Zwischenwandung 48 beitragende Öffnung 76 vorgesehen sein. Diese Öffnung 76 kann beispielsweise eine in Richtung der Fahrzeughöhenrichtung H abgeflacht runde, beispielsweise ovale oder elliptische Querschnittsgeometrie aufweisen. Bei Belastung in der Fahrzeuglängsrichtung L kann die Zwischenwandung 48 somit in sich kollabieren, wodurch die Gesamtsteifigkeit des Abgasschalldämpfers 18 gemindert ist. Selbstverständlich können auch mehrere derartige nicht von Rohren durchsetzte Öffnungen in einer bzw. mehreren der Zwischenwandungen vorgesehen sein. Auch können derartige grundsätzlich zur Schwächung von Zwischenwandungen beitragende Öffnungen in Zwischenwandungen vorgesehen sein, die lediglich dazu dienen, Volumenbereiche des Schalldämpferinnenraums 34 voneinander zu trennen, die jedoch nicht von Rohren, also beispielsweise dem Einlassrohr 36, dem Auslassrohr 20 oder einem Zwischenrohr 74, durchsetzt sind.

Die in der Fig. 4 dargestellte Zwischenwandung 48 umfasst ferner zwei Durchgangsöffnungen 78, 80, durch welche hindurch sich beispielsweise das Auslassrohr 20 und ein Zwischenrohr 74, ggf. aber auch das Einlassrohr 36 erstrecken. Man erkennt, dass bei dem in Fig. 4 dargestellten Ausgestaltungsbeispiel die Rohre 20, 74 mit im Wesentlichen kreisrunder Querschnittsgeometrie ausgebildet sind, während die von diesen Rohren 20, 74 durchsetzten Durchgangsöffnungen 78, 80 eine abgeflacht runde beispielsweise ovale oder elliptische Querschnittsgeometrie aufweisen. Die Durchgangsöffnungen 78, 80 weisen eine größere Querschnittsfläche auf, als die diese durchsetzenden Rohre 20, 74. Auch dies führt zu einer Schwächung der Zwischenwandung 48 an sich und somit einer leichteren Verformbarkeit bei Einleitung einer Kraft in Fahrzeuglängsrichtung L.

Wie man in Fig. 4 weiter erkennt, können die von jeweiligen Rohren durchsetzten Durchgangsöffnungen 78 bzw. 80 in verschiedenen Richtungen orientiert abgeflacht bzw. langgestreckt sein. Besonders vorteilhaft ist dabei die im Zusammenhang mit der Durchgangsöffnung 80 erkennbare Abflachung in der Fahrzeuglängsrichtung L, da dies zu einer deutlichen Schwächung der Zwischenwandung 48 bei Krafteinleitung in dieser Richtung beiträgt.

Ein weiterer Beitrag zur Schwächung einer derartigen Zwischenwandung kann dadurch geleistet werden, dass beispielsweise ausgehend von den Durchgangsöffnungen 78, 80 oder zumindest einer derartigen Durchgangsöffnung ein beispielsweise in Form eines Schlitzes, einer Einkerbung oder einer Materialschwächung bereitgestellter Schwächungsbereich 82 vorgesehen ist. Im dargestellten Beispiel sind jeweils zwei derartige Schwächungsbereiche 82 ausgehend von der gleichen Durchgangsöffnung 78, 80 vorgesehen, so dass zwischen zwei derartigen Schwächungsbereichen 80, 82 jeweils eine Verformungslasche 84 gebildet ist. Im Bereich einer derartigen Verformungslasche 84 ist die Zwischenwandung 48 leicht verformbar, insbesondere auch dann, wenn Kippmomente auf die Rohre 20 bzw. 74 wirken und diese bezüglich der Zwischenwandung 48 verkippen. Es ist daher besonders vorteilhaft, wenn eine derartige Verformungslasche jeweils in einem Bereich an eine Durchgangsöffnung 78 bzw. 80 anschließt, in welchem auch eine Kraftübertragungsverbindung zwischen einem die jeweilige Durchgangsöffnung durchsetzenden Rohr und der Zwischenwandung besteht.

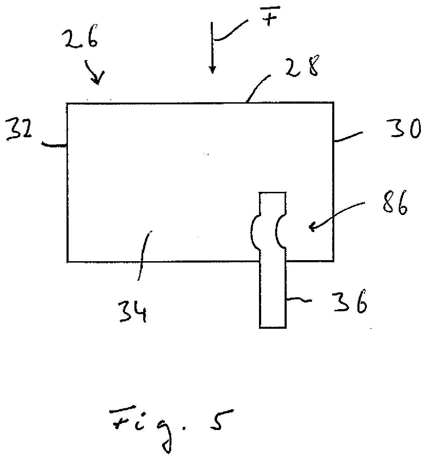

Ein weiteres Ausgestaltungsbeispiel eines Abgasschalldämpfers 18 ist in Fig. 5 in prinzipartiger Darstellung gezeigt. Man erkennt das Schalldämpfergehäuse 26 mit seinem im Wesentlichen in der Fahrzeugquerrichtung Q orientierten Gehäusemantel 28 und seinen beiden Stirnwandungen 30, 32. In dem in Fig. 5 dargestellten Beispiel durchsetzt das Einlassrohr 36 den Gehäusemantel 28 beispielsweise so, dass es sich im Wesentlichen in der Fahrzeuglängsrichtung L, also auch der potentiellen Richtung der Einleitung einer Kraft F erstreckt. Um bei Einleitung einer derartigen Kraft F auch das in dieser Richtung sich erstreckende und somit in dieser Richtung grundsätzlich vergleichsweise steife Einlassrohr 36 leichter verformen zu können, kann dieses mit einem oder mehreren Soll-Verformungsbereichen 86 ausgebildet sein. Ein derartiger Soll-Verformungsbereich 86 kann durch eine Ausbauchung, eine Querschnittserweiterung oder Querschnittsverminderung, eine balgenartige Ausgestaltung oder eine Ausgestaltung mit einer Vielzahl von Öffnungen ausgebildet sein und kann innerhalb oder außerhalb des Schalldämpferinnenraums 34 positioniert sein. Eine in Fahrzeuglängsrichtung L auf den Abgasschalldämpfer 18 wirkende Kraft F kann somit zu einer vergleichsweise leichten Verformung des Einlassrohrs 36 führen, so dass zumindest ein Teil der in den Abgasschalldämpfer 18 eingeleiteten Energie auf diese Art und Weise dissipiert werden kann.

Es sei abschließend noch einmal ausdrücklich betont, dass die vorangehend beschriebenen, zur verringerten Steifigkeit des Abgasschalldämpfers 18 bzw. des gesamten Abgasführungssystems 10 beitragenden Ausgestaltungsaspekte einzeln oder in beliebiger Kombination miteinander in Verbindung mit dem in Fig. 3 veranschaulichten erfindungsgemäßen Ausgestaltungsaspekt vorgesehen sein können. All diese Ausgestaltungsaspekte führen dazu, dass bei Beaufschlagung des Abgasführungssystems 10 bzw. des Abgasschalldämpfers 18 insbesondere bei einem Heckaufprall mit einer im Wesentlichen in der Fahrzeuglängsrichtung L orientierten Kraft F bzw. Kraftkomponente ein erheblicher Teil der in den Abgasschalldämpfer bzw. das Abgasführungssystem eingeleiteten Energie zur Verformung von Komponenten bzw. Bereichen des Abgasschalldämpfers 10 führt.

## Patentansprüche

1. Abgasschalldämpfer zum Quereinbau in ein Fahrzeug, umfassend ein in Richtung einer Gehäuselängsachse (G) langgestrecktes Schalldämpfergehäuse (26) mit einem Gehäusemantel (28) und zwei in Richtung der Gehäuselängsachse (G) in Abstand zueinander angeordneten und mit dem Gehäusemantel (28) einen Schalldämpferinnenraum (34) umgrenzenden Stirnwandungen (30, 32), wobei wenigstens ein Einlassrohr (36) in den Schalldämpferinnenraum (34) führt und wenigstens ein Auslassrohr (20) aus dem Schalldämpferinnenraum (34) führt, wobei der Gehäusemantel (28) mit einem in einer Abflachungsrichtung abgeflachten Querschnittsprofil ausgebildet ist, und wobei die Abflachungsrichtung einer Fahrzeuglängsrichtung (L) entspricht, **dadurch gekennzeichnet'** dass wenigstens ein Einlassrohr (36) oder/und wenigstens ein Auslassrohr (20) oder/und wenigstens ein Zwischenrohr (70) mit einem in der Abflachungsrichtung abgeflachten Querschnittsprofil ausgebildet ist.

2. Abgasschalldämpfer nach Anspruch 1, **dadurch gekennzeichnet,**
**dass** wenigstens eine Stirnwandung (30, 32) wenigstens einen Soll-Verformungsbereich (50, 52) aufweist.

3. Abgasschalldämpfer nach Anspruch 2, **dadurch gekennzeichnet, dass** wenigstens ein Soll-Verformungsbereich (50, 52) wenigstens einen zur Gehäuselängsachse (G) nicht orthogonalen Wandungsbereich (54, 56) umfasst.

4. Abgasschalldämpfer nach Anspruch 3, **dadurch gekennzeichnet, dass** der Wandungsbereich (54, 56) wölbungsartig, wellenartig, sickenartig oder Z-artig ausgebildet ist.

5. Abgasschalldämpfer nach einem der Ansprüche 1-4, **dadurch gekennzeichnet,**
**dass** ein Auslassrohr (20) wenigstens eine im Schalldämpferinnenraum (34) angeordnete Zwischenwandung (48) durchsetzt und vermittels wenigstens eines zur Gehäuselängsachse (G) angewinkelten Abstützorgans (58) bezüglich wenigstens einer Zwischenwandung (48) abgestützt ist, oder/und dass wenigstens eine Zwischenwandung (48) bezüglich des Gehäusemantels (28) vermittels einer Zwischenwandungsverkippformation (60) abgestützt ist.

6. Abgasschalldämpfer nach Anspruch 5, **dadurch gekennzeichnet, dass** das Auslassrohr (20) die wenigstens eine Zwischenwandung (48) mit einem zur Gehäuselängsachse (G) verlaufenden Auslassrohrbereich (38) durchsetzt, oder/und dass die Zwischenwandungsverkippformation (60) wenigsten einen, vorzugsweise mehrere bezüglich der Gehäuselängsachse (G) angewinkelte Zwischenwandungsabstützflächenbereiche (62, 64) am Gehäusemantel (28) umfasst.

7. Abgasschalldämpfer nach einem der Ansprüche 1-6, **dadurch gekennzeichnet, dass** wenigstens ein Einlassrohr (36) und wenigstens ein Auslassrohr (20) oder/und wenigstens ein Zwischenrohr (74) in einer ersten Versatzrichtung im Wesentlichen quer zur Gehäuselängsachse (G) und einer zur ersten Versatzrichtung orthogonalen zweiten Versatzrichtung im Wesentlichen quer zur Gehäuselängsachse (G) zueinander versetzt sind, oder/und dass der Gehäusemantel (28) orthogonal zu einer Fahrzeuglängsrichtung (L) zu positionierende, planare Seitenwandungen (88, 90) umfasst.

8. Abgasschalldämpfer nach Anspruch 7, **dadurch gekennzeichnet, dass** die erste Versatzrichtung einer Fahrzeuglängsrichtung (L) entspricht, oder/und dass die zweite Versatzrichtung einer Fahrzeughöhenrichtung (H) entspricht.

9. Abgasschalldämpfer nach einem der Ansprüche 7-8 **dadurch gekennzeichnet, dass** das abgeflachte Querschnittsprofil ein rundes Querschnittsprofil, vorzugsweise oval oder elliptisch, oder ein rechteckiges Querschnittsprofil ist.

10. Abgasschalldämpfer nach einem der Ansprüche 1-9, **dadurch gekennzeichnet, dass** wenigstens ein Einlassrohr (36) oder/und wenigstens ein Auslassrohr (20) wenigstens einen Soll-Verformungsbereich (66, 86) aufweist.

11. Abgasschalldämpfer nach Anspruch 10, **dadurch gekennzeichnet, dass** wenigstens ein Soll-Verformungsbereich (66, 86) einen wellenartig oder balgenartig ausgebildeten Längenbereich oder/und einen mit Schlitzen ausgebildeten Längenbereich oder/und einen mit einer Einbuchtung oder Ausbuchtung ausgebildeten Längenbereich oder/und einen mit einem abgeflachten Querschnittsprofil ausgebildeten Längenbereich oder/und einen bezüglich einer Fahrzeuglängsrichtung (L) sich angewinkelt erstreckenden Längenbereich umfasst.

12. Abgasschalldämpfer nach Anspruch 10 oder 11, **dadurch gekennzeichnet, dass** das wenigstens eine Auslassrohr (20) einen in Richtung der Gehäuselängsachse (G) sich erstreckenden Längenbereich (38) und einen Übergangsbereich (42) zu einem orthogonal zur Gehäuselängsachse (G) sich erstreckenden Längenbereich (40) umfasst, und dass im Übergangsbereich (42) wenigstens ein Soll-Verformungsbereich (66) vorgesehen ist.

13. Abgasschalldämpfer nach einem der Ansprüche 1-12, **dadurch gekennzeichnet, dass** wenigstens ein Auslassrohr (20) einen außerhalb des Schalldämpfergehäuses (26) orthogonal zur Gehäuselängsachse (G) sich erstreckenden Längenbereich (40) umfasst, und dass ein Verhältnis einer Querschnittsabmessung, vorzugsweise Durchmesser (d), dieses Längenbereichs (40) zu einem Abstand (D) dieses Längenbereichs (40) zu einer von dem Auslassrohr (20) durchsetzten Stirnwandung (32) im Bereich von 0,1 bis 0,2 liegt.

14. Abgasschalldämpfer nach einem der Ansprüche 1-13, **dadurch gekennzeichnet, dass** wenigstens ein Einlassrohr (36) oder/und wenigstens ein Auslassrohr (20) oder/und wenigstens ein Zwischenrohr (74) wenigstens eine im Schalldämpferinnenraum (34) vorgesehene Zwischenwandung (46, 48) im Bereich einer Rohrdurchgangsöffnung (78, 80) durchsetzt, und dass in der Zwischenwandung (46, 48) wenigstens eine nicht von einem Rohr (20, 36, 74) durchsetzte Öffnung (76) vorgesehen ist oder/und wenigstens eine Rohrdurchgangsöffnung (78, 80) eine Öffnungsquerschnittsfläche aufweist, die größer ist, als eine Querschnittsfläche des diese Rohrdurchgangsöffnung (78, 80) durchsetzenden Rohrs (20, 36, 74).

15. Abgasschalldämpfer nach Anspruch 14, **dadurch gekennzeichnet, dass** wenigstens eine Öffnung (76) oder/und wenigstens eine Rohrdurchgangsöffnung (78, 80) eine runde Öffnungsquerschnittsgeometrie, vorzugsweise oval oder elliptisch, aufweist.

16. Abgasschalldämpfer nach Anspruch 14 oder 15, **dadurch gekennzeichnet, dass** ausgehend von wenigstens einer Öffnung (76) oder/und wenigstens einer Rohrdurchgangsöffnung (78, 80) wenigstens ein vorzugsweise schlitzartiger Schwächungsbereich (82) in einer Zwischenwandung (46, 48) vorgesehen ist.

17. Abgasschalldämpfer nach Anspruch 16, **dadurch gekennzeichnet, dass** durch wenigstens zwei Schwächungsbereiche (82) eine Verformungslasche (84) bereitgestellt ist.

18. Abgasschalldämpfer nach einem der Ansprüche 1-17, **dadurch gekennzeichnet, dass** das Schalldämpfergehäuse (26) vermittels wenigstens eines bezüglich der Gehäuselängsachse (G) angewinkelt sich erstreckenden Abstützorgans (68) bezüglich einer Trägerstruktur (70) abgestützt oder abstützbar ist.

19. Abgasschalldämpfer nach Anspruch 18, **dadurch gekennzeichnet, dass** im Gehäuseinnenraum (34) wenigstens eine Zwischenwandung (46, 48) vorgesehen ist, und dass ein Abstand der wenigstens einen Zwischenwandung (46, 48) zu einem Abstützbereich (72) des wenigstens einen Abstützorgans (68) bezüglich des Schalldämpfergehäuses (26) in Richtung der Gehäuselängsachse (G) wenigstens 50 mm beträgt.

20. Kraftfahrzeug, umfassend einen Abgasschalldämpfer nach einem der vorangehenden Ansprüche, wobei der Abgasschalldämpfer vorzugsweise in einem Heckbereich des Kraftfahrzeugs mit in einer Fahrzeugquerrichtung orientierter Gehäuselängsachse des Schalldämpfergehäuses angeordnet ist.

## Claims

1. Exhaust muffler for transverse installation in a vehicle, comprising a muffler housing (26) elongated in the direction of a housing longitudinal axis (G) with a housing jacket (28) and with two front walls (30, 32), which are arranged at spaced locations from one another in the direction of the housing longitudinal axis (G) and define an interior (34) of the muffler with the housing jacket (28), wherein at least one inlet pipe (36) leads into the interior (34) of the muffler and at least one outlet pipe (20) leads out of the interior (34) of the muffler,
wherein the housing jacket (28) is configured with a cross-sectional profile flattened in a flattening direction and wherein the flattening direction corresponds essentially to a longitudinal direction (L) of the vehicle,
**characterized in that** at least one inlet pipe (36) or/and at least one outlet pipe (20) or/and at least one intermediate pipe (70) is configured with a cross-sectional profile flattened in a flattening direction.

2. Exhaust muffler in accordance with claim 1, **characterized in that** at least one front wall (30, 32) comprises at least one predetermined deformation area (50, 52).

3. Exhaust muffler in accordance with claim 2, **characterized in that** the at least one predetermined deformation area (50, 52) comprises at least one wall area (54, 56) that is not at right angles to the housing longitudinal axis (G).

4. Exhaust muffler in accordance with claim 3, **characterized in that** the wall area (54, 56) has an arc-shaped, wave-like, bead-like or Z-shaped configuration.

5. Exhaust muffler in accordance with one of the claims 1-4, **characterized in that** an outlet pipe (20) passes through at least one partition (48) arranged in the interior (34) of the muffler and is supported by means of at least one support member (58) positioned at an angle in relation to the housing longitudinal axis (G) in relation to at least one partition (48), or/and **in that** at least one partition (48) is supported by means of a partition tilting formation (60) in relation to the housing jacket (28).

6. Exhaust muffler in accordance with claim 5, **characterized in that** the outlet pipe (20) passes through the at least one partition (48) with an outlet pipe area (38) extending parallel to the housing longitudinal axis (G), or/and **in that** the partition tilting formation (60) comprises at least one and preferably more partition support surface areas (62, 64) positioned at an angle in relation to the housing longitudinal axis (G) at the housing jacket (28).

7. Exhaust muffler in accordance with one of the claims 1-6, **characterized in that** at least one inlet pipe (36) and at least one outlet pipe (20) or/and at least one intermediate pipe (74) are offset in relation to one another in a first offset direction at right angles to the housing longitudinal axis (G) and in a second offset direction that is at right angles to the first offset direction at right angles to the housing longitudinal axis (G) or/and **in that** the housing jacket (28) comprises planar lateral walls (88, 90) which are to be positioned orthogonally to a longitudinal direction (L) of the vehicle.

8. Exhaust muffler in accordance with claim 7, **characterized in that** the first offset direction corresponds to a longitudinal direction (L) of the vehicle, or/and **in that** the second offset direction corresponds to a vertical direction (H) of the vehicle.

9. Exhaust muffler in accordance with one of the claims 7-8, **characterized in that** the flattened cross-sectional profile is a round cross-sectional profile, preferably an oval or elliptic or a rectangular cross-sectional profile.

10. Exhaust muffler in accordance with one of the claims 1-9, **characterized in that** at least one inlet pipe (36) or/and at least one outlet pipe (20) has at least one predetermined deformation area (66, 86).

11. Exhaust muffler in accordance with claim 10, **characterized in that** at least one predetermined deformation area (66, 86) comprises a longitudinal area having a wave-like or bellows-like configuration or/and a longitudinal area configured with slots or/and a longitudinal area configured with an indentation or bulge or/and a longitudinal area configured with a flattened cross-sectional profile or/and a longitudinal area extending positioned at an angle in relation to a longitudinal direction (L) of the vehicle.

12. Exhaust muffler in accordance with claim 10 or 11, **characterized in that** at least one outlet pipe (20) comprises a longitudinal area (38) extending in the direction of the housing longitudinal axis (G) and a transition area (42) to a longitudinal area (40) extending at right angles to the housing longitudinal axis (G), and **in that** at least one predetermined deformation area (66) is provided in the transition area (42).

13. Exhaust muffler in accordance with one of the claims 1-12, **characterized in that** at least one outlet pipe (20) comprises at least one longitudinal area (40) extending at right angles to the housing longitudinal axis (G) outside the muffler housing (26), and **in that** a ratio of a cross-sectional dimension, preferably the diameter (d), of this longitudinal area (40) to a distance (D) of this longitudinal area (40) from a front wall (32), through which the outlet pipe (20) passes, is in the range of 0.1 to 0.2.

14. Exhaust muffler in accordance with one of the claims 1-13, **characterized in that** at least one inlet pipe (36) or/and at least one outlet pipe (20) or/and at least one intermediate pipe (74) passes through at least one partition (46, 48) provided in the interior (34) of the muffler in the area of a pipe passage opening (78, 80), and **in that** at least one opening (76), through which no pipe (20, 36, 74) passes, is provided in the partition (46, 48), or/and at least one pipe passage opening (78, 80) has an opening cross-sectional area that is larger than a cross-sectional area of the pipe (20, 36, 74) passing through this pipe passage opening (78, 80).

15. Exhaust muffler in accordance with claim 14, **characterized in that** at least one opening (76) or/and at least one pipe passage opening (78, 80) has a round cross-sectional geometry, preferably an oval or elliptical cross-sectional geometry.

16. Exhaust muffler in accordance with claim 14 or 15, **characterized in that** at least one, preferably slot-like weakened area (82) is provided in a partition (46, 48) starting from at least one opening (76) or/and at least from one pipe passage opening (78, 80).

17. Exhaust muffler in accordance with claim 16, **characterized in that** a deformation strap (84) is provided by at least two weakened areas (82).

18. Exhaust muffler in accordance with one of the claims 1-17, **characterized in that** the muffler housing (26) is or can be supported in relation to a carrier structure (70) by means of at least one support member (68) extending positioned at an angle in relation to the housing longitudinal axis (G).

19. Exhaust muffler in accordance with claim 18, **characterized in that** at least one partition (46, 48) is provided in the interior (34) of the housing, and that a distance of the at least one partition (46, 48) from a support area (72) of the at least one support member (68) in relation to the muffler housing (26) in the direction of the housing longitudinal axis (G) is at least 50 mm.

20. Motor vehicle, comprising an exhaust muffler in accordance with one of the preceding claims, wherein the exhaust muffler is arranged preferably in a rear area of the motor vehicle with the housing longitudinal axis of the muffler housing being oriented in a transverse direction of the vehicle.

## Revendications

1. Silencieux d'échappement pour l'installation transversal dans un véhicule, comprenant un boîtier de silencieux (26) allongé dans le sens d'un axe de boîtier longitudinal (G) avec un enveloppe de boitier (28) et avec deux parois frontales (30, 32) qui sont arrangées de manière espacé l'un de l'autre dans le sens de l'axe de boîtier longitudinal (G) et qui définissent avec l'enveloppe de boitier (28) un intérieur du silencieux (34), où au moins un tube d'entrée (36) mène vers l'intérieur du silencieux (34) et où au moins un tube de sortie (20) sort de l'intérieur du silencieux (34),
où l'enveloppe de boitier (28) est configuré avec un profil en section transversal aplati dans un sens d'aplatissement et où le sens d'aplatissement correspond essentiellement à un sens longitudinal (L) du véhicule,
**caractérisé en ce qu'**au moins un tube d'entrée (36) ou/et au moins un tube de sortie (20) ou/et au moins un tube intermédiaire (70) est configuré avec un profil en section transversal aplati dans un sens d'aplatissement.

2. Silencieux d'échappement selon la revendication 1, **caractérisé en ce qu'**au moins une paroi frontale (30, 32) comprend au moins une région de déformation prédéterminée (50, 52).

3. Silencieux d'échappement selon la revendication 2, **caractérisé en ce que** ladite au moins une région de déformation prédéterminée (50, 52) comprend au moins une région de paroi (54, 56) qui n'est pas orthogonal à l'axe de boîtier longitudinal (G).

4. Silencieux d'échappement selon la revendication 3, **caractérisé en ce que** la région de paroi (54, 56) a une configuration en forme d'arc, en forme ondulé, en forme de moulure ou en forme de Z.

5. Silencieux d'échappement selon une des revendications 1-4, **caractérisé en ce qu'**un tube de sortie (20) passe à travers au moins une partition (48) arrangée dans l'intérieur du silencieux (34) et est supporté par au moins un membre de support (58) positionné de manière angulaire à l'axe de boîtier longitudinal (G) par rapport à au moins une partition (48), ou/et **en ce qu'**au moins une partition (48) est supportée par une formation d'inclinaison de partition (60) par rapport à l'enveloppe de boitier (28).

6. Silencieux d'échappement selon la revendication 5, **caractérisé en ce que** le tube de sortie (20) passe à travers ladite au moins une partition (48) avec une région de tube de sortie (38) s'étendant en parallèle à l'axe de boîtier longitudinal (G) ou/et **en ce que** la formation d'inclinaison de partition (60) comprend au moins une et de préférence plusieurs régions de surface de support de partition (62, 64) positionnées de maniéré angulaire par rapport à l'axe de boîtier longitudinal (G) a l'enveloppe de boitier (28).

7. Silencieux d'échappement selon une des revendications 1-6, **caractérisé en ce qu'**au moins un tube d'entrée (36) et au moins un tube de sortie (20) ou/et au moins un tube intermédiaire (74) sont décales l'un par rapport à l'autre dans un premier sens de décalage essentiellement transversal à l'axe de boîtier longitudinal (G) et dans un deuxième sens de décalage qui est orthogonal au premier sens de décalage essentiellement transversal à l'axe de boîtier longitudinal (G), ou/et **en ce que** l'enveloppe de boitier (28) comprend des parois latérales (88, 90) planes qui sont à positionner de manière orthogonal à un sens longitudinal (L) du véhicule.

8. Silencieux d'échappement selon la revendication 7, **caractérisé en ce que** le premier sens de décalage correspond à un sens longitudinal (L) du véhicule ou/et **en ce que** le deuxième sens de décalage correspond a un sens vertical (H) du véhicule.

9. Silencieux d'échappement selon une des revendications 7-8, **caractérisé en ce que** le profil en section transversal aplati est un profil en section transversal rond, de préférence un profil en section transversal ovale ou elliptique ou rectangulaire.

10. Silencieux d'échappement selon une des revendications 1-9, **caractérisé en ce qu'**au moins un tube d'entrée (36) ou/et au moins un tube de sortie (20) comprend au moins une région de déformation prédéterminée (66, 86).

11. Silencieux d'échappement selon la revendication 10, **caractérisé en ce qu'**au moins une région de déformation prédéterminée (66, 86) comprend une région longitudinale avec une configuration en forme d'ondule ou en forme de soufflet ou/et une région longitudinale configurée avec des fentes ou/et une région longitudinale configurée avec un profil en section transversale aplati ou/et une région longitudinale s'étendant positionné de manière angulaire par rapport à un sens longitudinal (L) du véhicule.

12. Silencieux d'échappement selon les revendications 10 ou 11, **caractérisé en ce qu'**au moins un tube de sortie (20) comprend une région longitudinale (38) s'étendant dans le sens de l'axe de boîtier longitudinal (G) et une région de transition (42) vers une région longitudinale (40) s'étendant de manière orthogonal à l'axe de boîtier longitudinal (G) et **en ce qu'**au moins une région de déformation prédéterminée (66) est prévue dans la région de transition (42).

13. Silencieux d'échappement selon une des revendications 1-12, **caractérisé en ce qu'**au moins un tube de sortie (20) comprend une région longitudinale (40) s'étendant de manière orthogonal à l'axe de boîtier longitudinal (G) à l'extérieur du boîtier de silencieux (26) et **en ce qu'**un rapport entre une dimension en section transversale, de préférence le diamètre (d), de cette région longitudinale (40) et une distance (D) de cette région longitudinale (40) à une paroi frontale (32), à travers laquelle passe le tube de sortie (20) est comprise entre 0,1 et 0,2.

14. Silencieux d'échappement selon une des revendications 1-13, **caractérisé en ce qu'**au moins un tube d'entrée (36) ou/et au moins un tube de sortie (20) ou/et au moins un tube intermédiaire (74) passe à travers au moins une partition (46, 48) prévue à l'intérieur (34) du silencieux dans la région d'un orifice de passage de tube (78, 80) et **en ce qu'**au moins un orifice (76) sans passage de tube (20, 36, 74) est prévu dans la partition (46, 48) ou/et au moins un orifice de passage de tube (78, 80) comprend une région en section d'ouverture d'orifice qui est plus grande qu'une région en section transversale du tube (20, 36, 74) passant par cet orifice de passage de tube (78, 80).

15. Silencieux d'échappement selon la revendication 14, **caractérisé en ce qu'**au moins un orifice (76) ou/et au moins un orifice de passage de tube (78, 80) a une géométrie en section transversale ronde, de préférence une géométrie ovale ou elliptique.

16. Silencieux d'échappement selon les revendications 14 ou 15, **caractérisé en ce qu'**au moins une région affaiblie (82), de préférence sous forme de fente, est prévue dans une partition (46, 48) partant d'au moins un orifice (76) ou/et au moins d'un orifice de passage de tube (78, 80).

17. Silencieux d'échappement selon la revendication 16, **caractérisé en ce qu'**une languette de déformation (84) est prévue par au moins deux régions affaiblies (82).

18. Silencieux d'échappement selon une des revendications 1-17, **caractérisé en ce que** le boîtier de silencieux (26) est supporté ou peut être supporté par rapport à une structure de porteur (70) par au moins un membre de support (68) s'étendant positionné de manière angulaire par rapport à l'axe de boîtier longitudinal (G).

19. Silencieux d'échappement selon la revendication 18, **caractérisé en ce qu'**au moins une partition (46, 48) est prévue à l'intérieur du boîtier (34) et **en ce qu'**une distance de ladite au moins une partition (46, 48) à une région de support (72) dudit au moins un membre de support (68) par rapport au boîtier de silencieux (26) dans les sens de l'axe de boîtier longitudinal (G) est au moins 50 mm.

20. Véhicule à moteur, comprenant un silencieux d'échappement selon une des revendications précédentes, où le silencieux d'échappement est arrangé de préférence dans une région arrière du véhicule à moteur avec l'axe de boîtier longitudinal du boîtier de silencieux orienté dans un sens transversal du véhicule.
